# EUROPÄISCHE PATENTANMELDUNG

(11) **EP 1 097 794 A1**
(43) Veröffentlichungstag der Anmeldung: **09.05.2001**
(21) Anmeldenummer: 00124062.1
(22) Anmeldetag: 06.11.2000
(51) Int. Cl.: B29C 51/26, B29C 51/46, B29C 51/30, B29C 51/14, B29C 51/08, B29C 51/42

(54) **Formwerkzeug zur Herstellung von mehrschichtigen Formteilen und seine Verwendung**

(30) Priorität: 06.11.1999 DE 19953432
(71) Anmelder: Frauenhofer-Gesellschaft zur Förderung der angewandten Forschung e.V., D-80636 München (DE); Deuschle Modell- und Formenbau GmbH & Co. KG, 73242 Wernau (DE)
(72) Erfinder: Gleich, Klaus Dr.-Ing., 90518 Altdorf (DE); Eble, Eduard Dipl.-Ing., 89079 Ulm (DE); Scharrenberg, Alfred, 73256 Köngen (DE); Henning, Frank Dipl.-Ing., 76327 Pfinztal (DE); Tröster, Stefan Dipl.-Ing., 76137 Karlsruhe (DE); Walch, Michael Dipl.-Ing., 76327 Pfinztal (DE); Stark, Alexander Dipl.-Ing., 76227 Karlsruhe (DE); Starke, Christian Dipl.-Ing., 55542 Bad Kreuznach (DE)
(74) Vertreter: Lichti, Heiner, Dipl.-Ing.

(57) **Zusammenfassung**

Bei einem Formwerkzeug zur Herstellung von Formteilen durch Umformen, insbesondere Zieh-Formen, von im wesentlichen flächigen thermoplastischen Halbzeugen mit wenigstens einem Ober- und wenigstens einem Unterwerkzeug und zumindest an einem der Werkzeuge angeordneten, gesteuert bewegbaren Verschlußteilen (5) zum randseitigen Begrenzen des Formraums sind die Verschlußteile temperierbar. Die Position bzw. die Klemmkraft der Verschlußteile ist vorzugsweise in Abhängigkeit von der Umformzeit, dem Druckaufbau in dem Formwerkzeug, der Abstandsveränderung zwischen Ober- und Unterwerkzeug und/oder dem Nachziehweg der Außenränder des Halbzeugs während des Umformens stufenlos steuerbar, insbesondere programmierbar.

## Beschreibung

Die Erfindung betrifft ein Formwerkzeug zur Herstellung von mehrschichtigen Formteilen durch Umformen, insbesondere Zieh-Formen, von im wesentlichen flächigen wenigstens eine Deckschicht aufweisenden thermoplastischen Halbzeugen mit wenigstens einem Ober- und wenigstens einem Unterwerkzeug und zumindest an einem der Werkzeuge angeordneten, gesteuert bewegbaren, die Deckschicht führenden Verschlußteilen zum randseitigen Begrenzen des Formraums.

Zum Umformen thermoplastischer Halbzeuge wird das Halbzeug bis in den Bereich seiner Erweichungstemperatur erwärmt, wobei der Elastizitätsmodul des Halbzeugs verringert wird und letzteres in eine plastischen, gegebenenfalls auch gummielastischen Zustand übergeht. In diesem plastischen Zustand ist das Halbzeug mit verhältnismäßig geringen Kräften umformbar. Beim Umformen wird die Orientierung der Makromoleküle des thermoplastischen Halbzeugs verändert, was bei einem schnellen Abbau der Umformkräfte zu einer Rückverformung führt. Aus diesem Grund werden die Formteile nach dem Umformen entweder längere Zeit bei hoher Temperatur unter Formzwang gehalten, so daß die Molekülorientierungen retardieren, oder die Formteile werden unter Formzwang abgekühlt, um die Rückstellkräfte "einzufrieren".

Beim Zieh-Formen werden Formwerkzeuge eingesetzt, die ein Oberwerkzeug (Stempel) mit einer der gewünschten Gestalt des Formteils entsprechenden Formkontur und eine mit einer komplementären Formkontur versehenes Unterwerkzeug aufweisen, wobei das Halbzeug auf dem Unterwerkzeug angeordnet, plastifiziert und die Form geschlossen wird. Um eine leistungsfähige Stärke des Formteils zu erzielen, muß ein faltenfreies Nachziehen des Halbzeugs über den Rand des Formraums am Unterwerkzeug gewährleistet sein.

Um einerseits für einen hinreichenden Umformdruck in dem Formwerkzeug, andererseits für ein definiertes Erstarren des plastifizierten Halbzeugs unter Formzwang zu sorgen, ist ein seitliches Verschließen des Formwerkzeugs erforderlich. Zu diesem Zweck sind am Ober- oder Unterwerkzeug peripher angeordnete Verschlußteile bekannt, die einerseits ein einwandfreies Nachziehen des Halbzeugs über den Rand des Formraums und in diesen hinein, andererseits ein seitliches Verschließen des Formwerkzeugs gewährleisten sollen, um eine homogene Konsolidierung des Formteils zu ermöglichen. Die Verschlußteile verhindern weiterhin ein Austreten des plastifizierten Materials aus der Formkavität während des Umformens.

Beim Umformen von thermoplastischen Halbzeugen mit Sandwichstruktur und unterschiedlichem Zieh- bzw. Fließverhalten oder Halbzeugen mit wenigstens einer mechanisch empfindlichen Deckschicht, wie einer Dekorschicht oder einer Fasern aufweisenden Verstärkungsschicht, besteht die Gefahr, daß die Deckschicht zwischen dem Verschlußteil und der gegenüberliegenden Fläche des Formwerkzeugs eingeklemmt und während des Umformens, insbesondere während des Nachziehens über den Rand des Formwerkzeugs, beschädigt wird. Weiterhin besteht die Gefahr einer Beeinträchtigung der Deckschicht beim Schließen des Formwerkzeugs mittels der-Verschlußteile, indem das im Randbereich nicht hinreichend plastifizierte Halbzeug gequetscht und die Deckschicht dadurch beschädigt wird. Dies gilt insbesondere für solche Halbzeuge, die eine Deckschicht in Form eines Textils, wie eines Gewebes, Gewirkes, Geleges, Geflechtes, Gestrickes, Vlieses od. dgl. aufweisen, oder auch für solche Halbzeuge, deren Polymermatrix zumindest oberflächig mit Kurz-, Lang- oder Endlosfasern beliebiger Art, z.B. mit natürlichen oder synthetischen Fasern, wie Glas-, Carbon-, Aramid-, Metall-, Kohlefasern etc., verstärkt ist.

Der DE 33 15 746 A1 ist ein Formwerkzeug mit wenigstens zwei eine Formkavität begrenzenden, bewegbaren Formwerkzeugen entnehmbar, wobei die Formkavität an ihrem Rand mittels Verschlußteilen verschließbar ist, die an einem der Formwerkzeuge gesteuert bewegbar angeordnet sind und in das gegenüberliegende Formwerkzeug eintauchen. Die bewegbaren Verschlußteile verhindern ein Austreten von plastischer Masse und die Bildung eines randseitiges Grates am Formteil. Wie die Steuerung der Verschlußteile erfolgt, läßt die Druckschrift offen. Auch dient das Formwerkzeug zum Pressformen, indem das Halbzeug in das Formwerkzeug eingebracht und durch Pressen nach außen bis zu den Verschlußteilen verdrängt wird. In einer Variante dienen die Verschlußteile zum Beschneiden des Formteilrandes.

Der Erfindung liegt die Aufgabe zugrunde, ein Formwerkzeug zur Herstellung von Formteilen durch Umformen, insbesondere Zieh-Formen, von im wesentlichen flächigen thermoplastischen Halbzeugen mit wenigstens einem Ober- und wenigstens einem Unterwerkzeug und zumindest an einem der Werkzeuge angeordneten, gesteuert bewegbaren Verschlußteilen zum randseitigen Begrenzen des Formraums vorzuschlagen, bei dem eine Beschädigung des Halbzeugs beim Einziehen und Verschließen des Formwerkzeugs zuverlässig vermieden, gleichwohl eine saubere Abgrenzung des Formraums erreicht wird.

Erfindungsgemäß wird diese Aufgabe bei einem Formwerkzeug der eingangs genannten Art dadurch gelöst, daß die Verschlußteile temperierbar sind. Durch die temperierbaren Verschlußteile wird sichergestellt, daß das Halbzeug beim Schließen derselben in seinem Randbereich hinreichend plastifiziert und insbesondere bei einem Halbzeug mit wenigstens einer mechanisch empfindlichen Deckschicht, z.B. einer Faserschicht, letztere nicht beschädigt wird, da die plastifizierte Polymermatrix beim Schließen der Verschlußteile nachgibt, so daß die Deckschicht an dem Verschlußteil entlanggleiten kann.

Die Verschlußteile weisen vorzugsweise an ihren dem Halbzeug zugewandten Kanten Fasen auf, um eine Beschädigung des Halbzeugs beim Nachziehen über den Rand der Verschlußkante während des seitlichen Verschließens des Formraums zu vermeiden. Vorzugweise ist sowohl an der dem Formraum zugewandten als auch an der dem Formraum abgewandten Seite der dem Halbzeug zugewandten Kante des Verschlußteils eine Fase vorgesehen. Die Fasen können beispielsweise eine ballige Kontur aufweisen oder als Schräge ausgebildet sein.

In bevorzugter Ausführung ist vorgesehen, daß die Position der Verschlußteile stufenlos steuerbar ist, wobei die Verschlußteile insbesondere zwischen einer eingezogenen Position, in der sie die Formkavität freigeben, um ein Nachziehen des Halbzeugs über den Rand des Formwerkzeugs während des Umformens zu ermöglichen, und einer ausgezogenen Position, in der sie die Formkavität verschließen, um für den erforderlichen Druckaufbau im Formraum zu sorgen und ein Austreten von plastifizierter Polymermatrix zu verhindern, verstellbar sind. Entsprechend ist die durch die Verschlußteile auf den Randbereich des Halbzeugs wirkende Klemmkraft vorzugsweise stufenlos steuerbar.

Die Verschlußteile können beispielsweise in Abhängigkeit von der Umformzeit, dem Druckaufbau in dem Formwerkzeug, der Abstandsveränderung zwischen Ober- und Unterwerkzeug und/oder dem Nachziehweg der Außenränder des Halbzeugs während des Umformens steuerbar sein.

Die Verschlußteile sind bevorzugt mittels Fluidzylindern steuerbar, welche an dem Ober- oder dem Unterwerkzeug angeordnet sind. Die Fluidzylinder sind vorzugsweise hydraulisch, pneumatisch oder hydropneumatisch betrieben, so daß eine schnelle Ansteuerbarkeit und eine exakte Regelbarkeit der Position und der Klemmkraft der temperierbaren Verschlußteile gewährleistet ist.

Insbesondere ist vorgesehen, daß die Position und/oder die Klemmkraft und/oder die Schließgeschwindigkeit der Verschlußteile programmierbar ist.

Die Verschlußteile bestehen bevorzugt aus temperatur- und abriebfesten inerten Werkstoffen oder sind mit solchen beschichtet. Hierfür kommen vornehmlich metallische, keramische oder auch Polymer-Werkstoffe, z.B. Duroplaste, in Frage.

In Weiterbildung der Erfindung sind mehrere, getrennt voneinander steuerbare Verschlußteile an der Peripherie des Formraums vorgesehen, die sowohl an dem Ober- als auch an dem Unterwerkzeug angeordnet sein können, so daß auch räumliche Bauteile mittels zwei oder mehrerer Formkavitäten formbar sind.

Wie bereits erwähnt, ist das erfindungsgemäße Formwerkzeug insbesondere zum Umformen von thermoplastischen, im wesentlichen flächigen Halbzeugen mit wenigstens einer mechanisch empfindlichen Deckschicht oder mit wenigstens zwei Deckschichten und einer thermoplastischen Kernschicht, die sandwichartig angeordnet sind, geeignet. Die Deckschicht kann beispielsweise eine Dekorschicht oder eine insbesondere Fasern aufweisenden Verstärkungsschicht sein, wobei die Deckschicht beispielsweise ein Textil, wie ein Gewebe, Gewirke, Gelege, Geflecht, Gestricke, Vlies od. dgl., aufweist. Durch die temperierbaren und gesteuert bewegbaren Verschlußteile wird beim Umformen eines solchen Halbzeugs eine Beschädigung der Deckschicht vermieden, z.B. ein Zerreißen einer Deckschicht in Form eines Textils verhindert.

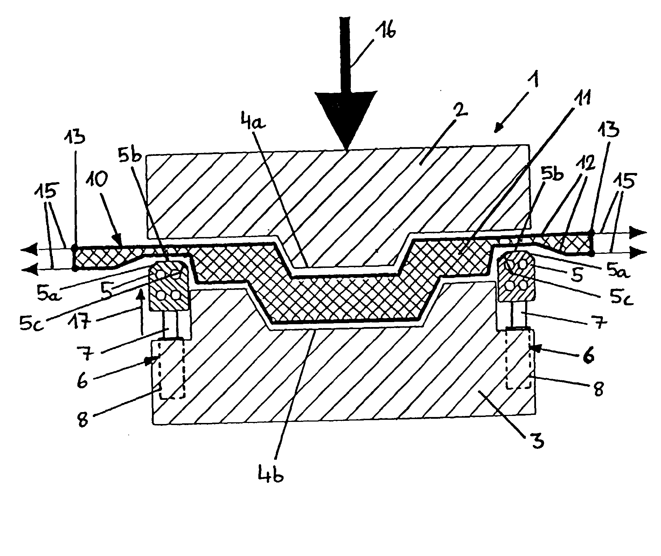

Nachstehend ist die Erfindung anhand eines in der Zeichnung im schematischen Schnitt gezeigten Ausführungsbeispiels näher erläutert.

Ein Formwerkzeug 1 zum Umformen, insbesondere Zieh-Formen, von im wesentlichen flächigen thermoplastischen Halbzeugen 10 weist ein Oberwerkzeug 2 mit einer der gewünschten Gestalt des Formteils entsprechenden Formkontur 4a und ein mit einer komplementären Formkontur 4b ausgestattetes Unterwerkzeug 3 auf. Sowohl in dem Ober- 2 als auch in dem Unterwerkzeug 3 können (nicht dargestellte) Entlüftungskanäle zum Freisetzen der zwischen dem Halbzeug 10 und dem jeweiligen Formwerkzeug 2, 3 eingeschlossenen Gase während des Umformens vorgesehen sein. An dem Unterwerkzeug 3 sind temperierbare und gesteuert, insbesondere programmierbar, bewegbare Verschlußteile 5 zum randseitigen Begrenzen des Formraums angeordnet, die mittels Fluidzylindern 6, z.B. Hydraulikzylindern, stufenlos zwischen einer Position, in der ihre Stirnseite 5b im wesentlichen mit der Oberseite des Unterwerkzeugs 3 fluchtet und im wesentlichen den gesamten Zwischenraum zwischen Ober- 2 und Unterwerkzeug 3 freigibt, und einer Position, in der die Stirnseite 5b der Verschlußteile 5 im wesentlichen an der Unterseite des Oberwerkzeugs 2 anliegt und die Formkavität verschließt, bewegbar. Die Fluidzylinder 6 bestehen aus dem eigentlichen Zylinder 8, der in dem Unterwerkzeug 3 angeordnet ist, und der mit dem Verschlußteil 5 endständig verbundenen Kolbenstange 7. Zur Versorgung der Hydraulikzylinder 6 mit einem druckbeaufschlagten Fluid sind ferner (nicht dargestellte) Anschlußmittel vorgesehen. Die Position und/oder die Klemmkraft der Verschlußteile 5 kann beispielsweise in Abhängigkeit von dem Druckaufbau in dem Formwerkzeug 1, der Abstandsveränderung zwischen Ober- 2 und Unterwerkzeug 3, der Umformzeit oder dem Nachziehweg der Außenränder 13 des Halbzeugs 10 während des Umformens steuerbar, insbesondere programmierbar, sein.

Um eine Beschädigung des Halbzeugs 10 beim Nachziehen in das Formwerkzeug 1 und beim Verschließen des Formraums zu verhindern, weisen die Verschlußteile 5 ferner an der dem Halbzeug 10 zugewandten Kante Fasen 5a, 5c auf.

In der gezeigten Ausführung ist das Halbzeug 10 sandwichartig aufgebaut und besteht aus einer Kernschicht 11 aus einer thermoplastischen Polymermatrix, die beispielsweise im Strangablageverfahren erzeugt wird, und jeweils einer beidseitig auf die Kernschicht 11 aufgebrachten, mechanisch empfindlichen Deckschicht 12. Die Deckschicht 12 kann beispielsweise als Dekorschicht ausgebildet sein oder insbesondere ein verstärkendes Textil, wie ein Gewebe, Gewirke, Gelege, Geflecht, Gestricke, Vlies od. dgl. aufweisen.

Zum Umformen des im Anfangszustand im wesentlichen flächigen Halbzeugs 10 wird dieses auf das Unterwerkzeug 3 aufgelegt und an seinen Umfangsrändern 13, insbesondere an der Deckschicht 12 gespannt (Pfeil 15), um eine Faltenbildung der Deckschicht zu verhindern. Die Verschlußteile 5 befinden sich in einer zurückgesetzten Position, in der ihre Stirnseite 5b im wesentlichen mit der Oberseite des Unterwerkzeugs 3 fluchtet. Das Halbzeug 10 wird plastifiziert und das Oberwerkzeug 2 in Richtung Pfeil 16 bewegt. Zum seitlichen Verschließen des Formraums werden die Verschlußteile 5 temperiert und mittels der Fluidzylinder 6 in Richtung Pfeil 17 bewegt, wobei die Temperatur der Verschlußteile 5 derart gewählt wird, daß ein hinreichendes Plastifizieren des Halbzeugs 10 randseitig im Bereich der Verschlußteile 5 sichergestellt und eine Beeinträchtigung der Deckschicht 12 beim Verstellen der Verschlußteile 5 in Richtung Pfeil 17 vermieden wird. Die Fasen 5a, 5c der Verschlußteile 5 gewährleisten ein Nachziehen des Halbzeugs 10 bzw. seiner Deckschicht 12 in die Kavität des Formwerkzeugs 1.

Das erfindungsgemäße Formwerkzeug 1 mit temperierbaren, gesteuert bewegbaren Verschlußteilen 5 ermöglicht die Verarbeitung von faserverstärkten, z.B. sandwichartig aufgebauten Halbzeugen 10 mit mechanisch hochwertigen Deckschichten 12, wobei eine Beeinträchtigung der Deckschicht 12 während des Umformens zuverlässig vermieden wird.

## Patentansprüche

1. Formwerkzeug (1) zur Herstellung von mehrschichtigen Formteilen durch Umformen, insbesondere Zieh-Formen, von im wesentlichen flächigen wenigstens eine Deckschicht (12) aufweisenden, thermoplastischen Halbzeugen (10) mit wenigstens einem Ober- (2) und wenigstens einem Unterwerkzeug (3) und zumindest an einem der Werkzeuge (2, 3) angeordneten, gesteuert bewegbaren, die Deckschicht (12) führenden Verschlußteilen (5) zum randseitigen Begrenzen des Formraums, dadurch gekennzeichnet, daß die Verschlußteile (5) temperierbar sind.

2. Formwerkzeuge nach Anspruch 1, dadurch gekennzeichnet, daß die Verschlußteile (5) an ihren dem Halbzeug (10) zugewandten Kanten Fasen (5a, 5c) aufweisen.

3. Formwerkzeug nach Anspruch 2, dadurch gekennzeichnet, daß die Fasen (5a, 5c) eine ballige Kontur aufweisen.

4. Formwerkzeug nach Anspruch 2, dadurch gekennzeichnet, daß die Fasen (5a, 5c) als Schräge ausgebildet sind.

5. Formwerkzeug nach einem der Ansprüche 1 bis 4, dadurch gekennzeichnet, daß die Position der Verschlußteile (5) stufenlos steuerbar ist.

6. Formwerkzeug nach einem der Ansprüche 1 bis 5, dadurch gekennzeichnet, daß die durch die Verschlußteile (5) auf den Randbereich des Halbzeugs (10) wirkende Klemmkraft stufenlos steuerbar ist.

7. Formwerkzeug nach einem der Ansprüche 1 bis 6, dadurch gekennzeichnet, daß die Verschlußteile (5) in Abhängigkeit von der Umformzeit steuerbar sind.

8. Formwerkzeug nach einem der Ansprüche 1 bis 7, dadurch gekennzeichnet, daß die Verschlußteile (5) in Abhängigkeit von dem Druckaufbau in dem Formwerkzeug (1) steuerbar sind.

9. Formwerkzeug nach einem der Ansprüche 1 bis 8, dadurch gekennzeichnet, daß die Verschlußteile (5) in Abhängigkeit von der Abstandsveränderung zwischen Ober- (2) und Unterwerkzeug (3) steuerbar sind.

10. Formwerkzeug nach einem der Ansprüche 1 bis 9, dadurch gekennzeichnet, daß die Verschlußteile (5) in Abhängigkeit von dem Nachziehweg der Außenränder (13) des Halbzeugs (10) steuerbar sind.

11. Formwerkzeug nach einem der Ansprüche 1 bis 10, dadurch gekennzeichnet, daß die Verschlußteile (5) mittels Fluidzylindern (6) steuerbar sind.

12. Formwerkzeug nach Anspruch 11, dadurch gekennzeichnet, daß die Fluidzylinder (6) hydraulisch, pneumatisch oder hydropneumatisch betrieben sind.

13. Formwerkzeug nach einem der Ansprüche 1 bis 12, dadurch gekennzeichnet, daß die Position und/oder die Schließkraft und/oder die Schließgeschwindigkeit der Verschlußteile (5) programmierbar ist.

14. Formwerkzeug nach einem der Ansprüche 1 bis 13, dadurch gekennzeichnet, daß die Verschlußteile (5) aus metallischen Werkstoffen bestehen oder mit solchen beschichtet sind.

15. Formwerkzeug nach einem der Ansprüche 1 bis 13, dadurch gekennzeichnet, daß die Veschlußteile (5) aus keramischen Werkstoffen bestehen oder mit solchen beschichtet sind.

16. Formwerkzeug nach einem der Ansprüche 1 bis 13, dadurch gekennzeichnet, daß die Verschlußteile (5) aus Polymer-Werkstoffen bestehen oder mit solchen beschichtet sind.

17. Formwerkzeug nach einem der Ansprüche 1 bis 16, dadurch gekennzeichnet, daß mehrere, getrennt voneinander steuerbare Verschlußteile (5) an der Peripherie des Formraums vorgesehen sind.

18. Verwendung eines Formwerkzeugs (1) nach einem der Ansprüche 1 bis 17 zum Umformen von mehrschichtigen, im wesentlichen flächigen thermoplastischen Halbzeugen (10) mit wenigstens einer mechanisch empfindlichen Deckschicht (12).

19. Verwendung nach Anspruch 18 zum Umformen von thermoplastischen Halbzeugen (10) mit wenigstens zwei Deckschichten (12) und einer thermoplastischen Kernschicht (11), die sandwichartig angeordnet sind.

20. Verwendung nach Anspruch 18 oder 19, dadurch gekennzeichnet, daß die Deckschicht (12) eine Dekorschicht ist.

21. Verwendung nach einem der Ansprüche 18 bis 20, dadurch gekennzeichnet, daß die Kernschicht (11) oder eine weitere Schicht faserverstärkt ist.

22. Verwendung nach einem der Ansprüche 18 bis 21, dadurch gekennzeichnet, daß die Deckschicht (12) eine insbesondere Fasern aufweisende Verstärkungsschicht ist.

23. Verwendung nach einem der Ansprüche 18 bis 22, dadurch gekennzeichnet, daß die Deckschicht (12) wenigstens ein Textil, wie ein Gewebe, Gewirke, Gelege, Geflecht, Gestricke, Vlies od. dgl. aufweist.
